# EUROPEAN PATENT APPLICATION

(11) **EP 4 550 357 A1**
(43) Date of publication of application: **07.05.2025**
(21) Application number: 23831036.1
(22) Date of filing: 09.06.2023
(51) Int. Cl.: H01B 1/06, C01G 25/02, H01B 1/08, H01M 4/13, H01M 4/62, H01M 10/052, H01M 10/0562

(54) **SOLID ELECTROLYTE, POSITIVE ELECTRODE, ELECTROLYTE LAYER AND SECONDARY BATTERY**

(30) Priority: 29.06.2022 JP 2022104634
(71) Applicant: CANON KABUSHIKI KAISHA, Tokyo 146-8501 (JP)
(72) Inventor: MASADA Yohei, Tokyo 146-8501 (JP); AOTANI Takaharu, Tokyo 146-8501 (JP); DOGUCHI Kentaro, Tokyo 146-8501 (JP)
(74) Representative: Canon Europe Limited
(86) International application number: PCT/JP2023/021539
(87) International publication number: WO 2024/004587

(57) **Abstract**

A solid electrolyte contains a borate containing Li, an element R selected from a group including Yb, Er, Ho, Tm, and La, an element A selected from a group including Al, Fe, Mn, and Ga, and an element M selected from a group including Zr and Ce.

## Description

### Technical Field

The present invention relates to a solid electrolyte, an anode, an electrolyte layer, and a secondary battery containing the electrolyte.

### Background Art

All-solid-state secondary batteries containing solid electrolytes can have higher heat resistance and improved safety because electrolytes do not leak or volatilize. Thus, it is possible to reduce module costs and increase energy densities.

As one of such solid electrolytes, a sulfide-based solid electrolyte has been reported. However, the sulfide-based solid electrolyte has a problem in terms of workability because a sulfide is used as a raw material for their production. Thus, oxide-based solid electrolytes have been reported as non-sulfide-based solid electrolytes.

As Li-containing solid electrolytes, NASICON-type Li1+xAlxTi2-x(PO4)3 (LATP), perovskite-type Li3+xLa2/3-xTiO3 (LLT), and garnet-type cubic Li7La3Zr2O12 (LLZ) have been reported. As Na-containing solid electrolytes, β"-alumina-type Na2O·(5-7)Al2O3 and NASICON-type Na3Zr2Si2PO12 have been reported. However, these solid electrolytes have the following problems: usable cathode materials are limited, and sintering at a high temperature of higher than 1,000°C is required in order to improve conductivity by bringing interfaces between solid electrolytes and between a solid electrolyte and an active material into close contact with each other. In particular, sintering at a high temperature may lead to the formation of a high-resistance phase between solid electrolytes and at the interface between a solid electrolyte and an active material, limiting the improvement of ionic conductivity.

For these reasons, attempts have recently been made to lower the sintering temperature. Patent Literature 1 discloses that the post baking temperature can be reduced to about 900°C by using a solid electrolyte containing lithium borate, such as Li2+xC1-xBxO3.

Patent Literature 2 states that mixing Li3BO3 with LLZ-type oxides can reduce the sintering temperature to 650°C to 800°C when a solid electrolyte is formed.

### Citation List

### Patent Literature

PTL 1: Japanese Patent Laid-Open No. 5-54712 PTL 2: Japanese Patent Laid-Open No. 2013-37992

### Summary of Invention

### Technical Problem

In secondary batteries containing the respective solid electrolytes disclosed in Patent Literatures 1 and 2, lower post baking temperatures were used, and high-resistance phases were not easily formed as intermediate layers at interfaces with other materials. However, regions occupied by the respective solid electrolytes have an ionic conductivity σSE of lower than 1 × 10-7 S/cm at room temperature, in some cases. There has been a demand for an oxide-based solid electrolyte having an enhanced ionic conductivity.

The present invention aims to provide a high-ionic-conductivity solid electrolyte that can be produced by sintering at a low temperature, and an anode, an active material layer, and a secondary battery containing the solid electrolyte.

### Solution to Problem

A solid electrolyte according to an embodiment of the present invention contains an oxide represented by the general formula Li6-xR1-y-aAy-bMx(BO3)3.

Here, R is at least one or two elements selected from a group including trivalent elements Yb, Er, Ho, and Tm, A is an element selected from Al, Fe, Mn, and Ga, M1 is a tetravalent element, x and y are real numbers satisfying 0 < x, y < 1, and a and b are real numbers satisfying a + b = x. A solid electrolyte according to an embodiment of the present invention contains a borate containing Li, an element R selected from a group including Yb, Er, Ho, Tm, and La, an element A selected from a group including Al, Fe, Mn, and Ga, and an element M selected from a group including Zr and Ce.

A solid electrolyte according to an embodiment of the present invention contains a borate containing Li, an element R selected from a group including Yb, Er, Ho, Tm, and La, an element A selected from a group including Al, Fe, Mn, and Ga, and an element M selected from a group including Zr and Ce, in which the solid electrolyte exhibits two diffraction peaks in a diffraction angle 2θ range of 28.0° or more and 29.0° or less in an X-ray diffraction analysis using a K-alpha emission line in copper, and a difference 2θd in diffraction angle between a higher-angle diffraction peak and a lower-angle diffraction peak is 0.416° or more.

A solid electrolyte according to an embodiment of the present invention contains an oxide represented by the general formula Li6-xR1-y-aAy-bMx(BO3)3, where in the formula, R is at least one or two elements containing a rare-earth element selected from a group including Yb, Er, Ho, Tm, and La, A is a metal element selected from Al, Fe, Mn, and Ga, M is a tetravalent element, x and y are real numbers satisfying 0 < x, y < 1, and a and b are real numbers satisfying a + b = x. A solid electrolyte contains an oxide represented by the general formula Li6-xR1-y-aAy-bMx(BO3)3, where in the formula, R is a rare-earth element selected from a group including Yb, Er, Ho, Tm, and La, A is a metal element selected from a group including Al, Fe, Mn, and Ga, M is an element selected from a group including Zr and Ce, x and y are real numbers satisfying 0 < x, y < 1, and a and b are real numbers satisfying a + b = x.

### Advantageous Effects of Invention

According to the present invention, it is possible to provide a high-ionic-conductivity solid electrolyte that can be produced by sintering at a low temperature, and a secondary battery containing the solid electrolyte.

### Brief Description of Drawings

[Fig. 1] Fig. 1 is a graph illustrating the relationship between the ionic conductivity and the value of the composition x (x1 + x2) of a substitution element M of each of solid electrolytes according to Examples 1 to 17 included in a first embodiment.
[Fig. 2] Fig. 2 is a graph illustrating the relationship between the ionic conductivity and the value of the composition y of a substitution element A of each of the solid electrolytes according to Examples 1 to 17 included in the first embodiment.
[Fig. 3] Fig. 3 illustrates the diffraction curves of the solid electrolytes according to Examples 1 to 14.
[Fig. 4] Fig. 4 illustrates the diffraction curves of the solid electrolytes according to Examples 15 to 17.
[Fig. 5] Fig. 5 illustrates the diffraction curves of the solid electrolytes according to Examples 1 to 8.
[Fig. 6] Fig. 6 illustrates the diffraction curves of the solid electrolytes according to Examples 12 to 14.
[Fig. 7] Fig. 7 illustrates the diffraction curves of the solid electrolytes according to Examples 15 to 17.
[Fig. 8A] Fig. 8A is a schematic cross-sectional view of a secondary battery according to a second embodiment.
[Fig. 8B] Fig. 8B is a partially enlarged view of the anode and the electrolyte layer of the secondary battery according to the second embodiment.

### Description of Embodiments

Preferred embodiments of the present invention are described in detail below with reference to the drawings.

(First Embodiment) A solid electrolyte contains an oxide represented by the general formula Li6-xR1-y-aAy-bMx(BO3)3.

In the formula, R is an element selected from Yb, Tm, Ho, Er, and La, A is an element selected from Al, Fe, Mn, and Ga, and M is a tetravalent element selected from a group including Zr and Ce. Furthermore, a and b are real numbers satisfying 0 ≤ a, b < 1, and a + b = x; and x and y are real numbers satisfying 0 < x, y < 1.

In the formula, when R contains at least two elements selected from the group including the trivalent elements Yb, Er, Ho, Tm, and La, the element may be combined with another trivalent element having an ionic radius close to the element selected from the group including Yb, Er, Ho, Tm, and La.

In other words, the solid electrolyte according to the present embodiment contains an oxide represented by the general formula Li6-xR1-y-aAy-bMx(BO3)3.

In the formula, R is at least one or two rare-earth elements selected from a group including Yb, Er, Ho, Tm, and La, A is an element selected from a group including Al, Fe, Mn, and Ga, and M is an element selected from a group including Zr and Ce. Furthermore, a and b are real numbers satisfying 0 ≤ a, b < 1, and a + b = x; and x and y are real numbers satisfying 0 < x, y < 1.

In the formula, when R contains at least two elements selected from the group including rare-earth elements Yb, Er, Ho, Tm, and La, a combination of the rare-earth elements in the group may be used, and a combination with another rare-earth element having an ionic radius close to these elements may also be used.

A possible reason for improved ionic conductivities of the solid electrolytes containing the oxides represented by the above general formula will be described below.

When the rare-earth elements Yb, Er, Ho, Tm, and La are partially replaced with a tetravalent element M, the charge balance is adjusted in such a manner that the crystal as a whole is neutral, thereby producing a state deficient in Li+ in the crystal lattice. A portion lacking an element is generally referred to as a vacancy. A phenomenon in which Li+ around the vacancy moves to the vacancy, which is generally called hopping, occurs in a concerted manner, thereby improving the ionic conductivity. In this case, a change is considered to occur in the crystal lattice by replacing a portion of the rare-earth elements Yb, Er, Ho, Tm, and La with Al, Fe, Mn, and Ga, which are metal elements A having the same trivalent valence. At this time, the vacancies that serve as paths for Li+ ions are considered to become a suitable size for the movement of Li+.

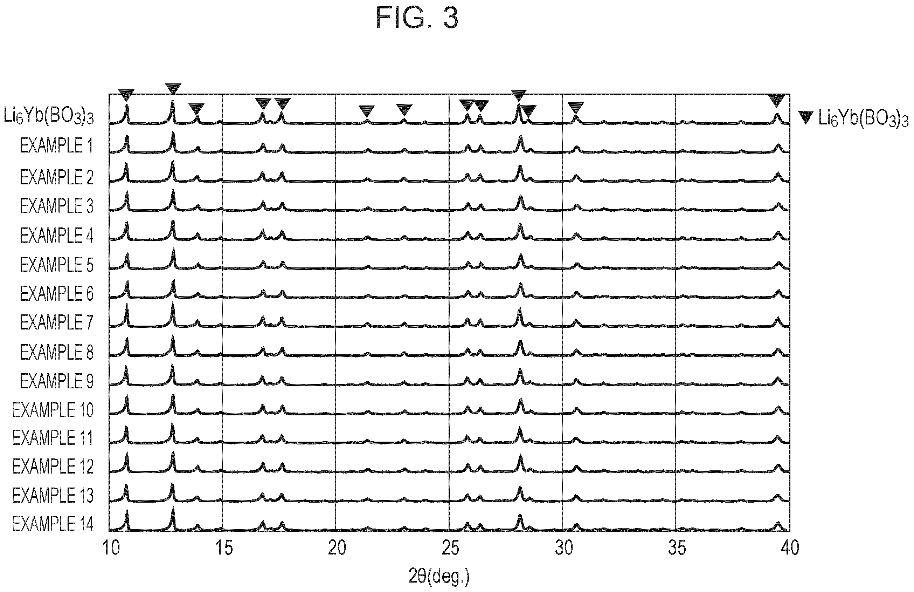

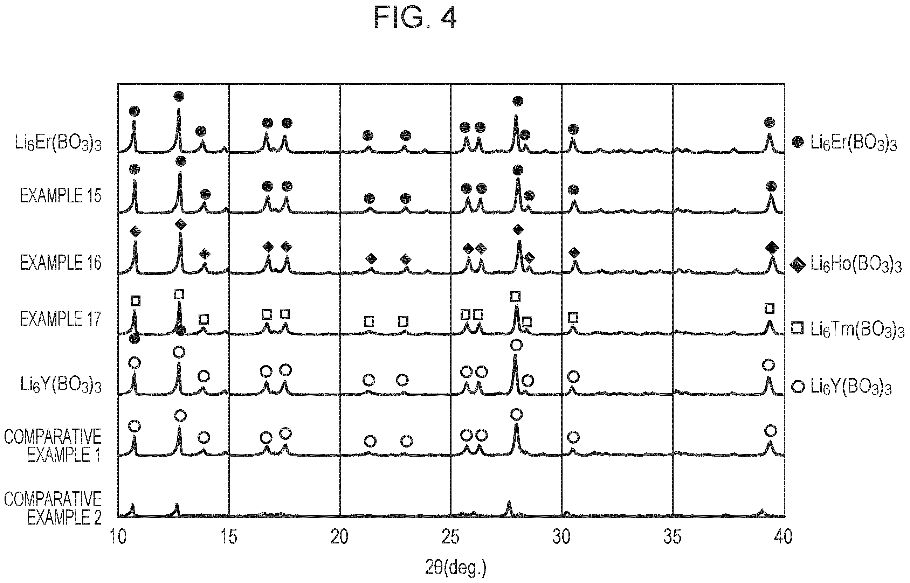

In a general guideline for element substitution, an atomic radius within ±15% is considered to be suitable. However, the atomic radii of the rare-earth element R and the metal element A described above are outside this guideline, and therefore substitution is considered to be difficult. However, although the stabilization mechanism has not been verified, as illustrated in the comparison results of XRD of Figs. 3 and 4, the crystal structure does not change before and after the substitution, and no impurities are detected; hence, the rare-earth element R is substituted with the metal element A in the present compound. It is presumed that since the substitution is performed by an element having such a large difference in atomic radius, the crystal lattice is also changed, and the path of the Li+ described above is effectively formed.

In other words, the solid electrolyte of the present embodiment is a solid electrolyte containing a borate that contains Li, an element R selected from a group including Yb, Er, Ho, Tm, and La, an element A selected from a group including Al, Fe, Mn, and Ga, and an element M selected from a group including Zr and Ce.

The solid electrolyte of the present embodiment preferably has a monoclinic crystal structure.

In an X-ray diffraction analysis (hereinafter, referred to as "XRD") using a K-alpha emission line in copper, a diffraction peak at a diffraction angle 2θ of about 28° changes in accordance with the composition of the solid electrolyte.

The solid electrolyte of the present embodiment in which the oxide is represented by the general formula Li6-xR1-y-aAy-bMx(BO3)3, where R is Yb and A is Al, preferably exhibits a diffraction peak in the range of 2θ = 28.0° or more and 28.20° or less in XRD using the K-alpha emission line in copper. More preferably, the solid electrolyte has a peak in the range of 2θ = 28.10° or more and 28.20° or less.

In XRD using the K-alpha emission line in copper, the position of a diffraction peak at about 2θ = 28° can be controlled by adjusting the value of x in the general formula and changing the element represented by M.

M in the above general formula is a tetravalent element. M is at least one element selected from a group including Zr and Ce.

As elements substituted for Yb, Er, Ho, Tm, and La, which are trivalent elements R, elements having similar ionic radii are easily substituted therefor. Specific examples thereof include Zr4+, Ce4+, Sn4+, Ti4+, Nb4+, Pb4+, Pr4+, and Nb5+ as candidates. Among them, Zr4+ and Ce4+ are more easily substituted.

In the general formula, a and b are real numbers satisfying 0 ≤ a, b < 1, and a + b = x; and x and y are real numbers satisfying 0 < x, y < 1. a and b correspond to the ratios in which the element R and the element A, respectively, are substituted with the substitution element M. The ratios in which the element R and the element A are substituted with the substitution element M may be freely selected. The ratios of the substitution element M are preferably the same as the ratios of the element R and the element A. That is, it is preferable that a:b = [R]:[A]. As x corresponding to the amount of substitution element M substituted for the element R, a value of 0.025 or more and 0.4 or less is used. As more preferred x, a value of 0.050 or more and 0.227 or less is used. a and b represent the ratios at which the elements R and A, respectively, are substituted with the substitution element M. As y corresponding to the amount of element R substituted for the element A, a value of 0.05 or more and 0.50 or less is used. As more preferred x, a value of 0.010 or more and 0.200 or less is used.

The reasons why the above range of x is preferred are inferred as follows: When the value of x is less than 0.025, a sufficient structural defect does not occur because of a small amount of element R replaced, and paths through which Li+ ions pass are not sufficiently formed, thereby resulting in no improvement in ionic conductivity. When the value of x is more than 0.4, the amount of substitution element M is too large. Thus, the excess element M that does not contribute to substitution for the element R in the crystal contributes as an inhibition component for ionic conduction rather than the substitution effect in the crystal.

The reasons why the above range of y is preferred are inferred as follows: When the value of y is less than 0.050, a sufficient structural change does not occur because of a small amount of element R replaced, and paths through which ions pass do not change to an appropriate size, thereby resulting in no improvement in ionic conductivity. When the value of y is more than 0.50, the amount of substitution element A is too large. Thus, the excess element A that does not contribute to substitution for the element R in the crystal contributes as an inhibition component for ionic conduction rather than the substitution effect in the crystal.

A method for producing the solid electrolyte of the present embodiment will be described below.

The method for producing a solid electrolyte of the present embodiment includes a post baking step of heating Li, R, A, and M, which are elements constituting a solid electrolyte containing an oxide represented by the general formula Li6-xR1-y-aAy-bMx(BO3)3, or oxides thereof in an oxygen-containing atmosphere (where in the formula, R is at least one or two elements selected from a group including rare-earth elements Yb, Er, Ho, Tm, and La, A is an element selected from a group including Al, Fe, Mn, and Ga, and M is a tetravalent element).

The method for producing a solid electrolyte of the present embodiment includes a prebaking step of performing heat treatment at a temperature lower than the melting point of the oxides to perform solid-phase synthesis of the oxide represented by the above general formula, and a step of densifying the resulting oxide by heat treatment.

While the method, including the prebaking step and the post baking, for producing a solid electrolyte of the present embodiment will be described in detail below, the present invention is not limited to the following production method.

<Prebaking Step> In the prebaking step, reagent-grade raw materials, such as Li3BO3, H3BO3, Yb2O3, Er2O3, Ho2O3, Tm2O3, La2O3, α-Al2O3, Fe2O3, Mn2O3, Ga2O3, ZrO2, and CeO2, are weighed with reference to a predetermined stoichiometric ratio as an index and mixed together to form Li6-xR1-y-aAy-bMx(BO3)3. Other raw materials to be weighed so as to achieve a predetermined stoichiometric ratio include SnO2 and Nb2O3. Here, R is at least one or two elements selected from a group including rare-earth elements Yb, Er, Ho, Tm, and La, A is an element selected from a group including Al, Fe, Mn, and Ga, and M is a tetravalent element.

As a device used for mixing, a mixer such as a ball mill can be used, in addition to a mortar and pestle.

After a mixed powder of the above raw materials is prepared by the mixing treatment, the resulting mixed powder is pressure-molded into pellets. Here, as the pressure-molding method, a known pressure-molding method, such as a cold uniaxial molding method or a cold isostatic pressure molding method, can be used. As the conditions for pressure molding in the prebaking step, the pressure can be, but is not particularly limited to, 100 to 300 MPa, for example.

The resulting pellets are prebaked at 500°C to 800°C with, for example, an atmospheric post baking apparatus to perform solid-phase synthesis. The time of the prebaking step can be, but is not particularly limited to, for example, about 700 to 750 minutes (such as, 720 minutes).

The resulting prebaked body is the oxide represented by the general formula Li6-xR1-xMx(BO3)3. The pre-sintered body can be ground with, for example, a mortar and pestle, to prepare a prebaked powder.

<Post Baking Step> In the post baking step, at least one selected from a group including the prebaked body prepared in the prebaking step and the prebaked body is subjected to pressure molding and post baking to prepare a dense sintered body.

The pressure molding and the post baking may be performed simultaneously by, for example, discharge plasma sintering or hot pressing. Alternatively, after pellets are produced by cold uniaxial molding, post baking may be performed in an air atmosphere, for example. As the conditions for pressure molding in the post baking step, the pressure can be, but is not particularly limited to, 100 to 300 MPa, for example.

The post baking temperature is preferably 800°C or lower, more preferably 700°C or lower, still more preferably 680°C or lower.

The time of the post baking step can be appropriately changed in accordance with, for example, the temperature of the post baking, and can be, for example, about 700 to 750 minutes (such as 720 minutes).

The cooling method in the post baking step is not particularly limited. Natural cooling may be used. Cooling slower than natural cooling may also be used.

A secondary battery of the present embodiment will be described below.

A typical secondary battery includes an anode containing an anode active material, a cathode containing a cathode active material, an electrolyte containing a solid electrolyte disposed between the anode and the cathode, and if necessary, a current collector.

The secondary battery of the present embodiment is a secondary battery including at least an anode containing an anode active material, a cathode containing a cathode active material, and an electrolyte, and at least one selected from a group including the anode, the cathode, and the electrolyte contains the solid electrolyte of the present embodiment.

In the secondary battery of the present embodiment, the electrolyte may contain the solid electrolyte of the present embodiment, or may contain another solid electrolyte. Examples of another solid electrolyte that may be contained include, but are not particularly limited to, Li3PO4, Li7La3Zr2O12, Li0.33La0.55TiO3, Li1.5Al0.5Ge1.5(PO4)3, and Li1.3Al0.3Ti1.7(PO4)3. The solid electrolyte of the present embodiment is preferably contained in the electrolyte of the secondary battery of the present embodiment in an amount of 25% or more by mass, more preferably 50% or more by mass, still more preferably 75% or more by weight, particularly preferably 100% by mass.

The secondary battery of the present embodiment can be produced by a known method, for example, by lamination of an anode, a solid electrolyte, and a cathode, shaping, and heat treatment. The solid electrolyte of the present embodiment can be produced by heat treatment at a lower temperature than in the conventional technique, thereby reducing the formation of a high-resistance phase caused by the reaction between the solid electrolyte and the electrode active material. This can result in a secondary battery having excellent output characteristics. The "solid" used in the present specification includes an object having self-supporting properties to the extent that a certain shape and volume are maintained even if the posture of the object is changed. In other words, the object is not flowable and has a viscosity of less than 1 × 107 cP (less than 1 × 104 Pa·s).

A method for measuring physical properties according to the present disclosure will be described below.

· Identification of R, A, and M When the collected sample is not a mixture with other materials, after the collected sample is treated into a solution, the composition ratio of the sample can be identified by, for example, inductively coupled high-frequency plasma atomic emission spectroscopy (ICP-AES) or wavelength dispersive X-ray fluorescence spectrometry (WDXRF). WDXRF may also be referred to as WDX.

When there is a high probability that the collected sample is a mixture, a scanning analyzer that can provide elemental mapping images, such as an X-ray photoelectron spectrometer (XPS, ESCA) or a scanning electron microscope equipped with an energy dispersive X-ray fluorescence analyzer (EDXRF), can be used. Hereinafter, the scanning electron microscope equipped with the energy dispersive X-ray fluorescence spectrometer (EDXRF) may be abbreviated as SEM/EDX. When there is a high probability that the collected sample is a mixture, the crystal structure may be identified using a transmission electron microscope equipped with an electron beam diffraction function (TEM-ED). EDXRF may also be referred to as EDX.

ICP-AES and XPS are used in order to precisely determine the composition ratio of Li, which is a light element, to other elements with higher atomic numbers, such as B, O, Al, Zr, and rare-earth elements.

When the collected sample is a mixture, pretreatment is used to selectively remove a non-target portion for analysis by a physical removal process, such as dicing or ion beam processing, chemical removal, such as dry etching or wet etching, or a combination thereof. For the pretreatment, washing, degreasing, sectioning, grinding, pelletizing, or the like may be used.

With regard to a standard sample, an S-4800 available from Hitachi High-Technologies Corporation can be used as an analyzer for SEM/EDX.

· Measurement of X-Ray Diffraction Peak RINT-2100 available from Rigaku Corporation is used for X-ray diffraction analysis of solid electrolytes.

A powder prepared by grinding a solid electrolyte with a mortar and pestle is subjected to X-ray diffraction analysis using characteristic X-rays of CuKα. The temperature is room temperature, the analysis range is 10° to 70°, the step is 0.016°, and the scan speed is 0.5 steps/second.

### (Second Embodiment)

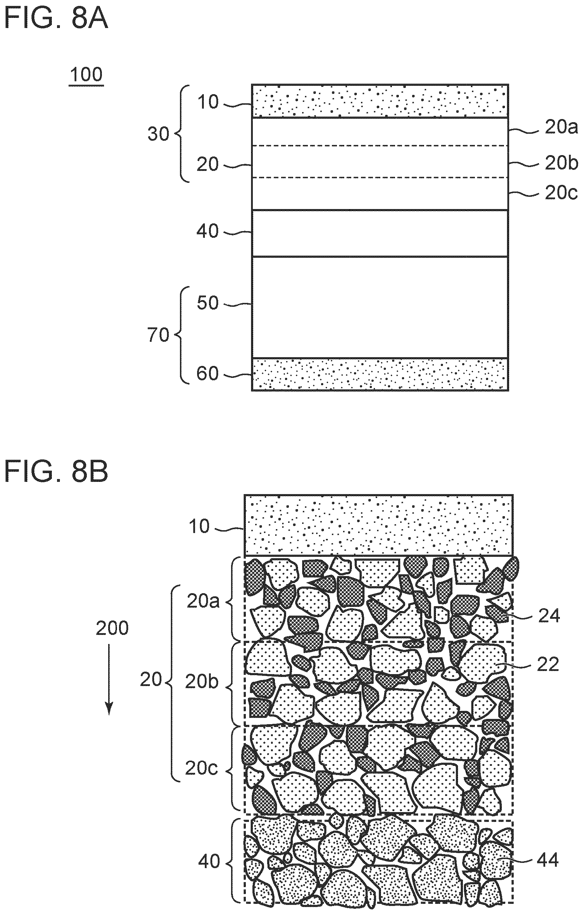

<Structure of Secondary Battery and Anode> An electrolyte layer 40 containing a solid electrolyte 44 according to the first embodiment and a secondary battery 100 including the electrolyte layer 40 will be described with reference to Figs. 8A and 8B.

Fig. 8A is a schematic cross-sectional view of the secondary battery 100 including the electrolyte layer 40 in which the solid electrolyte 44 of the present embodiment is used. The secondary battery 100 includes the electrolyte layer 40 on a surface of an anode active material layer 20 opposite the side on which an anode current collector layer 10 is in contact with the anode active material layer 20. The secondary battery 100 includes a cathode 70 on a side of the electrolyte layer 40 opposite the side on which the electrolyte layer 40 is in contact with the anode active material layer 20. The cathode 70 includes a cathode active material layer 50 on a surface of the electrolyte layer 40 opposite the surface in contact with the anode active material layer 20. The cathode 70 includes a cathode current collector layer 60 on a surface of the cathode active material layer 50 opposite the surface in contact with the electrolyte layer 40. In other words, the secondary battery 100 includes, in a lamination direction 200, the cathode 70, the electrolyte layer 40, and an anode 30.

As illustrated in Fig. 8B, the electrolyte layer 40 in which an electrolyte 44 of the present embodiment is used is in contact with the anode 30 including the anode current collector layer 10 and the anode active material layer 20 that contains active material particles 22 and an anode electrolyte 24. In the present specification, a structure configured to accept or release lithium ions (active material ions) to or from the electrolyte layer 40 is referred to as an anode; thus, the anode active material layer 20, which is a portion of the anode 30 excluding the anode current collector layer 10, may also be referred to as the anode 20, as illustrated in Fig. 8A. The anode active material layer 20 of the present embodiment includes the anode electrolyte 24 and thus may be referred to as a composite anode active material layer 20 or a composite anode structure 20.

The current collector layer 10 is a conductor that conducts electrons to or from an external circuit (not illustrated) and the active material layer. As the current collector layer 10, a self-supporting film of a metal, such as stainless steel (SUS) or aluminum, or a laminated structure of metal foil and a resin base is used.

The anode active material layer 20 includes anode active material layers 20a, 20b, and 20c as sublayers. The anode active material layers 20a, 20b, and 20c are distinguished by the unit of lamination in the layer thickness direction 200 before the active material particles 22 and the anode electrolyte 24 are sintered. The anode active material layers 20a, 20b, and 20c may have distributions in the layer thickness direction in terms of the volume fractions of the active material particles 22 and the anode electrolyte 24, a conductive assistant (not illustrated), and voidage (porosity). The layer thickness direction 200 is parallel or anti-parallel to the lamination direction in which the layers are laminated, and thus may also be referred to as the lamination direction 200.

The solid electrolyte 44 according to the present embodiment is used to the anode electrolyte 24 in the composite anode active material layer 20. The anode electrolyte 24 and the solid field substance 44 in the electrolyte layer 40 may have the same composition and particle size distribution, or may have different compositions and particle size distributions.

(Cathode) As a method for producing the cathode, a known method can be used. As in the second embodiment of the present application, the method for producing the anode 30 in the first embodiment may be used to the formation of the cathode with the necessary changes. Similarly to the anode 30, the cathode may have a structure in which both the cathode active material and the solid electrolyte are contained in the layer, or may be formed of a film composed of a metal, such as metal Li or In-Li.

[Cathode Active Material] Examples of the cathode active material include metals, metal fibers, carbon materials, oxides, nitrides, silicon, silicon compounds, tin, tin compounds, and various alloy materials. Among these, metals, oxides, carbon materials, silicon, silicon compounds, tin, tin compounds, and the like are preferred from the viewpoint of capacity density. Examples of metals include metal Li and In-Li. Examples of oxides include Li4Ti5O12 (lithium titanate: LTO). Examples of carbon materials include various natural graphites (graphites), coke, graphitizable carbon material undergoing graphitization, carbon fibers, spherical carbon, various artificial graphites, and amorphous carbon. Examples of silicon compounds include silicon-containing alloys, silicon-containing inorganic compounds, silicon-containing organic compounds, and solid solutions. Examples of tin compounds include SnOb (0 < b < 2), SnO2, SnSiO3, Ni2Sn4, and Mg2Sn. The cathode material may contain a conductive assistant. Examples of the conductive assistant include graphites, such as natural graphite and artificial graphite, and carbon blacks, such as acetylene black, ketjen black, channel black, furnace black, lamp black, and thermal black. Further examples of the conductive assistant include conductive fibers, such as carbon fibers, carbon nanotubes, and metal fibers, carbon fluoride, metal powders, such as aluminum, conductive metal oxides, such as conductive whiskers, e.g., zinc oxide, and titanium oxide, and organic conductive materials, such as phenylene-based dielectrics.

### EXAMPLES

An example of producing and evaluating a solid electrolyte of the present embodiment as a sintered body will be described. The present disclosure is not limited to the following examples.

### [Example 1]

<Prebaking Step> Li3BO3 (available from Toshima Manufacturing Co., Ltd.), H3BO3 (available from Kishida Chemical Co., Ltd.), Yb2O3 (available from Kojundo Chemical Laboratory Co., Ltd.), α-Al2O3 (available from Kojundo Chemical Laboratory Co., Ltd.), and ZrO2 (available from Nippon Denko Co., Ltd.) were provided as raw materials for a solid electrolyte. They were weighed in a predetermined stoichiometric ratio in such a manner that the composition after sintering was Li5.95Yb0.85Al0.045Zr0.1(BO3)3, and mixed with a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step> The prebaked powder prepared as described above was molded and heat-treated in the same manner as the prebaking, thereby producing a sintered body of Example 1. The heating temperature was 670°C, and the holding time was 720 minutes.

### [Examples 2 to 8]

<Prebaking Step> Prebaked bodies and prebaked powders were produced in the same process as in Example 1, except that the raw materials described in Example 1 were weighed in predetermined stoichiometric ratios in such a manner that each value was the value given in Table 1.

<Post Baking Step> The pre-sintered powders prepared as described above were subjected to the same post baking step as in Example 1 to produce sintered bodies.

### [Examples 9 and 10]

<Prebaking Step> Li3BO3 (available from Toshima Manufacturing Co., Ltd.), H3BO3 (available from Kishida Chemical Co., Ltd.), Yb2O3 (available from Kojundo Chemical Laboratory Co., Ltd.), α-Al2O3 (available from Kojundo Chemical Laboratory Co., Ltd.), ZrO2 (available from Nippon Denko Co., Ltd.), and CeO2 (available from Iwatani Corporation) were provided as raw materials for a solid electrolyte. They were weighed in predetermined stoichiometric ratios in such a manner that the compositions after sintering were Li5.875Yb0.7875Al0.0875Zr0.1Ce0.025(BO3)3 and Li5.877Yb0.7591Al0.135Zr0.104Ce0.0186(BO3)3, and mixed in a mortar and pestle.

After that, each of the mixed powders was subjected to cold uniaxial molding using a hydraulic press SSP-10A available from Shimadzu Corporation and heat treatment in an air atmosphere. The heating temperature was 650°C, and the holding time was 720 minutes.

The resulting prebaked bodies were ground with a mortar and pestle to prepare prebaked powders.

<Post Baking Step> Each of the prebaked powders prepared as described above was molded and heat-treated in the same manner as the prebaking, thereby producing a sintered body of Example 1. The heating temperature was 670°C, and the holding time was 720 minutes.

### [Example 11]

<Prebaking Step> Li3BO3 (available from Toshima Manufacturing Co., Ltd.), H3BO3 (available from Kishida Chemical Co., Ltd.), Yb2O3 (available from Kojundo Chemical Laboratory Co., Ltd.), La2O3 (available from Kojundo Chemical Laboratory Co., Ltd.), α-Al2O3 (available from Kojundo Chemical Laboratory Co., Ltd.), and ZrO2 (available from Nippon Denko Co., Ltd.) were provided as raw materials for a solid electrolyte. They were weighed in a predetermined stoichiometric ratio in such a manner that the composition after sintering was Li5.875Yb0.7200La0.090Al0.090Zr0.1(BO3)3, and mixed in a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step> The prebaked powder prepared as described above was molded and heat-treated in the same manner as the prebaking, thereby producing a sintered body of Example 26. The heating temperature was 670°C, and the holding time was 720 minutes.

### [Example 12]

<Prebaking Step> Li3BO3 (available from Toshima Manufacturing Co., Ltd.), H3BO3 (available from Kishida Chemical Co., Ltd.), Yb2O3 (available from Kojundo Chemical Laboratory Co., Ltd.), α-Fe2O3 (available from Kojundo Chemical Laboratory Co., Ltd.), and ZrO2 (available from Nippon Denko Co., Ltd.) were provided as raw materials for a solid electrolyte. They were weighed in a predetermined stoichiometric ratio in such a manner that the composition after sintering was Li5.9Yb0.81Fe0.09Zr0.1(BO3)3, and mixed in a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step> The prebaked powder prepared as described above was molded and heat-treated in the same manner as the prebaking, thereby producing a sintered body of Example 1. The heating temperature was 670°C, and the holding time was 720 minutes.

### [Example 13]

<Prebaking Step> Li3BO3 (available from Toshima Manufacturing Co., Ltd.), H3BO3 (available from Kishida Chemical Co., Ltd.), Yb2O3 (available from Kojundo Chemical Laboratory Co., Ltd.), Mn2O3 (available from Kojundo Chemical Laboratory Co., Ltd.), and ZrO2 (available from Nippon Denko Co., Ltd.) were provided as raw materials for a solid electrolyte. They were weighed in a predetermined stoichiometric ratio in such a manner that the composition after sintering was Li5.9Yb0.81Mn0.09Zr0.1(BO3)3, and mixed in a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step> The prebaked powder prepared as described above was molded and heat-treated in the same manner as the prebaking, thereby producing a sintered body of Example 1. The heating temperature was 670°C, and the holding time was 720 minutes.

### [Example 14]

<Prebaking Step> Li3BO3 (available from Toshima Manufacturing Co., Ltd.), H3BO3 (available from Kishida Chemical Co., Ltd.), Yb2O3 (available from Kojundo Chemical Laboratory Co., Ltd.), Ga2O3 (available from Kojundo Chemical Laboratory Co., Ltd.), and ZrO2 (available from Nippon Denko Co., Ltd.) were provided as raw materials for a solid electrolyte. They were weighed in a predetermined stoichiometric ratio in such a manner that the composition after sintering was Li5.9Yb0.81Ga0.09Zr0.1(BO3)3, and mixed in a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step> The prebaked powder prepared as described above was molded and heat-treated in the same manner as the prebaking, thereby producing a sintered body of Example 1. The heating temperature was 670°C, and the holding time was 720 minutes.

### [Example 15]

<Prebaking Step> Li3BO3 (available from Toshima Manufacturing Co., Ltd.), H3BO3 (available from Kishida Chemical Co., Ltd.), Tm2O3 (available from Kojundo Chemical Laboratory Co., Ltd.), α-Al2O3 (available from Kojundo Chemical Laboratory Co., Ltd.), and ZrO2 (available from Nippon Denko Co., Ltd.) were provided as raw materials for a solid electrolyte. A prebaked body and a prebaked powder were prepared in the same process as in Example 1, except that weighing was performed in a predetermined stoichiometric ratio in such a manner that the composition after sintering was Li5.9Tm0.810Al0.090Zr0.100(BO3)3.

<Post Baking Step> The pre-sintered powder prepared as described above was subjected to the same post baking step as in Example 1 to produce a sintered body. The heating temperature was 670°C, and the holding time was 720 minutes.

[Example 16] Li3BO3 (available from Toshima Manufacturing Co., Ltd.), H3BO3 (available from Kishida Chemical Co., Ltd.), Ho2O3 (available from Kojundo Chemical Laboratory Co., Ltd.), α-Al2O3 (available from Kojundo Chemical Laboratory Co., Ltd.), and ZrO2 (available from Nippon Denko Co., Ltd.) were provided as raw materials for a solid electrolyte. A prebaked body and a prebaked powder were prepared in the same process as in Example 1, except that weighing was performed in a predetermined stoichiometric ratio in such a manner that the composition after sintering was Li5.9Ho0.810Al0.090Zr0.100(BO3)3.

<Post Baking Step> The pre-sintered powder prepared as described above was subjected to the same post baking step as in Example 1 to produce a sintered body. The heating temperature was 670°C, and the holding time was 720 minutes.

### [Example 17]

<Prebaking Step> Li3BO3 (available from Toshima Manufacturing Co., Ltd.), H3BO3 (available from Kishida Chemical Co., Ltd.), Er2O3 (available from Kojundo Chemical Laboratory Co., Ltd.), α-Al2O3 (available from Kojundo Chemical Laboratory Co., Ltd.), and ZrO2 (available from Nippon Denko Co., Ltd.) were provided as raw materials for a solid electrolyte. They were weighed in a predetermined stoichiometric ratio in such a manner that the composition after sintering was Li5.9Er0.810A10.090Zr0.100(BO3)3, and mixed in a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step> The prebaked powder prepared as described above was molded and heat-treated in the same manner as the prebaking, thereby producing a sintered body of Example 7. The heating temperature was 670°C, and the holding time was 720 minutes.

### [Comparative Example 1]

<Prebaking Step> Li3BO3 (available from Toshima Manufacturing Co., Ltd.), H3BO3 (available from Kishida Chemical Co., Ltd.), Y2O3 (available from Kojundo Chemical Laboratory Co., Ltd.), α-Al2O3 (available from Kojundo Chemical Laboratory Co., Ltd.), and ZrO2 (available from Nippon Denko Co., Ltd.) were provided as raw materials for a solid electrolyte. A prebaked body and a prebaked powder were prepared in the same process as in Example 1, except that weighing was performed in a predetermined stoichiometric ratio in such a manner that the composition after sintering was Li5.9Y0.810Al0.090Zr0.100(BO3)3.

<Post Baking Step> The pre-sintered powder prepared as described above was subjected to the same post baking step as in Example 1 to produce a sintered body. The heating temperature was 670°C, and the holding time was 720 minutes.

### [Comparative Example 2]

<Prebaking Step> Li3BO3 (available from Toshima Manufacturing Co., Ltd.), H3BO3 (available from Kishida Chemical Co., Ltd.), Sm2O3 (available from Kojundo Chemical Laboratory Co., Ltd.), and ZrO2 (available from Nippon Denko Co., Ltd.) were provided as raw materials for a solid electrolyte. A prebaked body and a prebaked powder were prepared in the same process as in Example 1, except that weighing was performed in a predetermined stoichiometric ratio in such a manner that the composition after sintering was Li5.9Sm0.810Al0.090Zr0.100(BO3)3.

<Post Baking Step> The pre-sintered powder prepared as described above was subjected to the same post baking step as in Example 1 to produce a sintered body. The heating temperature was 670°C, and the holding time was 720 minutes.

### [Reference Example 1]

<Prebaking Step> Li3BO3 (available from Toshima Manufacturing Co., Ltd.), H3BO3 (available from Kishida Chemical Co., Ltd.), Yb2O3 (available from Kojundo Chemical Laboratory Co., Ltd.), and ZrO2 (available from Nippon Denko Co., Ltd.) were provided as raw materials for a solid electrolyte. They were weighed in a predetermined stoichiometric ratio in such a manner that the composition after sintering was Li5.900Yb0.900Zr0.100(BO3)3, and mixed in a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step> The prebaked powder prepared as described above was molded and heat-treated in the same manner as the prebaking, thereby producing a sintered body of Reference Example 1. The heating temperature was 650°C, and the holding time was 720 minutes.

### [Reference Example 2]

<Prebaking Step> Li3BO3 (available from Toshima Manufacturing Co., Ltd.), H3BO3 (available from Kishida Chemical Co., Ltd.), Y2O3 (available from Kojundo Chemical Laboratory Co., Ltd.), and ZrO2 (available from Nippon Denko Co., Ltd.) were provided as raw materials for a solid electrolyte. They were weighed in a predetermined stoichiometric ratio in such a manner that the composition after sintering was Li5.900Y0.900Zr0.100(BO3)3, and mixed in a mortar and pestle.

After that, the mixed powder was subjected to cold uniaxial molding using a hydraulic press SSP-10A available from Shimadzu Corporation and heat treatment in an air atmosphere. The heating temperature was 650°C, and the holding time was 720 minutes.

The resulting prebaked body was ground with a mortar and pestle to prepare a prebaked powder.

<Post Baking Step> The prebaked powder prepared as described above was molded and heat-treated in the same manner as the prebaking, thereby producing a sintered body of Reference Example 2. The heating temperature was 650°C, and the holding time was 720 minutes.

The sintered bodies of Examples 1 to 17, Comparative Examples 1 and 2, and Reference Examples 1 and 2 were subjected to composition analysis and measurement of X-ray diffraction peaks by the above-described methods. The ionic conductivity was measured by the following method. A method for measuring the ionic conductivity is described below. Table 1 presents the obtained evaluation results.

· Measurement of Ionic Conductivity Gold electrodes were deposited on the top and bottom surfaces of each flat sintered body obtained by the post baking step using a magnetron sputtering system MSP-10, available from Vacuum Device Co., Ltd., to produce a sample for AC impedance measurement.

A Potentiostat/Galvanostat SI 1287A and a Frequency Response Analyzer 1255B available from Solartron Analytical were used for the AC impedance measurement. The measurement conditions were room temperature and frequencies from 1 MHz to 0.1 Hz.

The resistance of the sintered body was calculated from the complex impedance plot obtained by the impedance measurement. From the calculated resistance, the thickness of the sintered body, and the electrode area, the ionic conductivity was determined using the following equation. Ionic conductivity (S/cm) = thickness of sintered body (cm)/(resistance of sintered body (Ω) × electrode area (cm2))

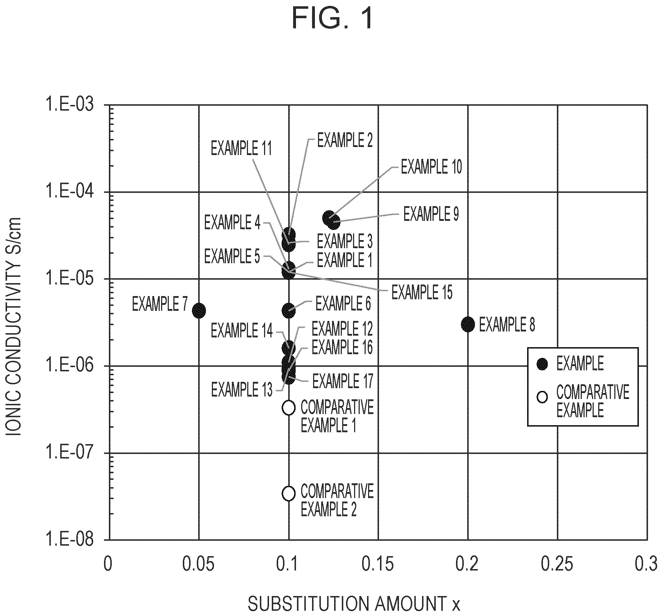

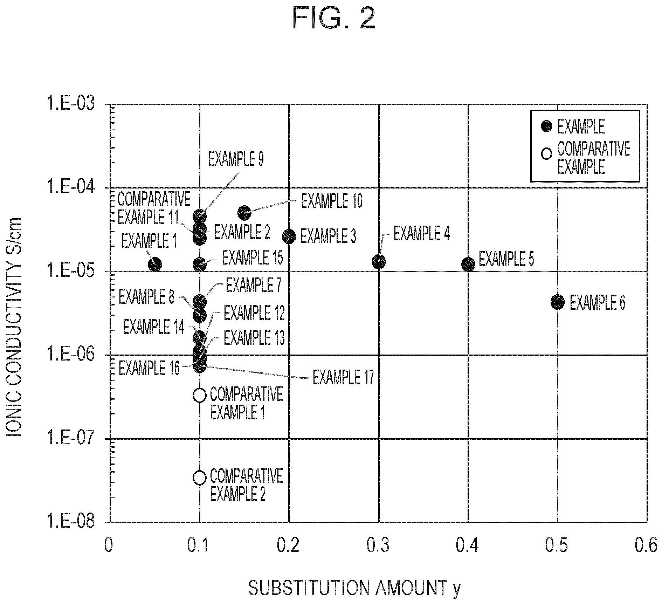

· Results Table 1 presents the stoichiometric amounts of raw materials and the heating temperature during the post baking when the solid electrolytes according to Examples 1 to 17 and Comparative Examples 1 and 2 were produced, the diffraction peak positions, and the ionic conductivity. Fig. 1 illustrates the relationship between the ionic conductivity and the value of the composition x (x1 + x2) of the substitution element M of each of the solid electrolytes according to Examples 1 to 17 included in the first embodiment, Comparative Examples 1 and 2, and Reference Examples 1 to 3. Fig. 2 illustrates the relationship between the ionic conductivity and the value of the composition y of the metal element A of each of the solid electrolytes according to Examples 1 to 17 included in the first embodiment and Comparative Examples 1 and 2.

The results of the above composition analysis indicated that each sintered body (solid electrolyte) had the elements of the raw materials described in Table 1. The sintered bodies (solid electrolytes) according to Examples 1 to 17 were each a solid electrolyte that was successfully densified at a low temperature of lower than 700°C and that exhibited high ionic conductivity.

Figs. 3 and 4 illustrate diffraction curves obtained by XRD in the range of 2θ = 10° to 40°. It can be seen that the crystal structure in each of Examples 1 to 14 is monoclinic Li6Yb(BO3)3, the crystal structure in Example 15 is monoclinic Li6Er(BO3)3, the crystal structure in Example 16 is monoclinic Li6Ho(BO3)3, and the crystal structure in Example 17 is monoclinic Li6Tm(BO3)3.

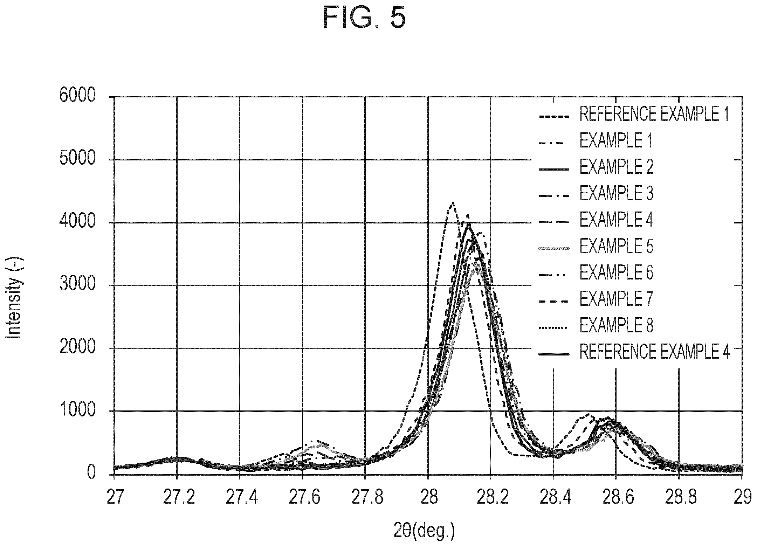

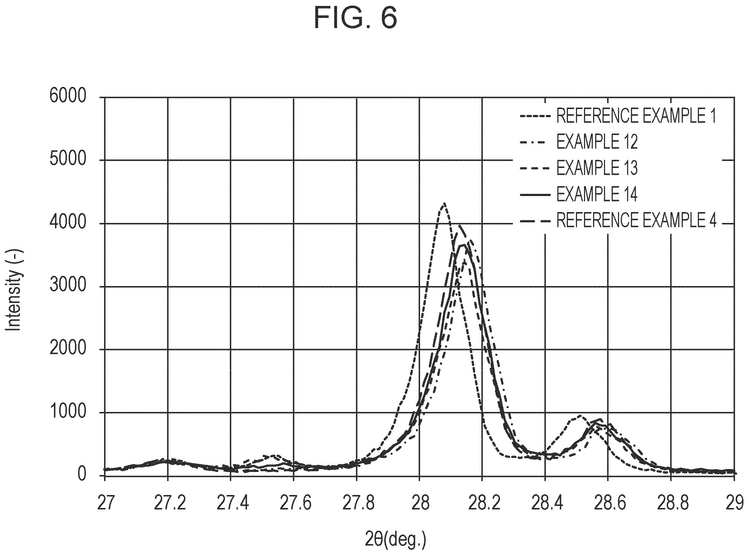

Figs. 5 and 6 illustrate diffraction curves obtained by XRD in the range of 2θ = 27° or more and 29° or less when R is Yb. It can be seen that the peak positions near the diffraction angles of 2θ = 28.1° and 28.5° observed in the solid electrolytes according to Examples 1 to 8 are shifted to higher angles than the peak positions of the solid electrolyte according to Reference Example 1. When the X-ray diffraction profiles of the solid electrolytes according to Examples 1 to 8 are compared with Reference Example 2, it is found that the peak positions near the diffraction angles 2θ = 28.1° and 28.5° are almost the same. From these facts, it is considered that the X-ray diffraction profiles have changed in response to a change in the crystal structure caused by the substitution of at least one element selected from a group including M for at least part of Yb, which is a rare-earth element, and the metal element A.

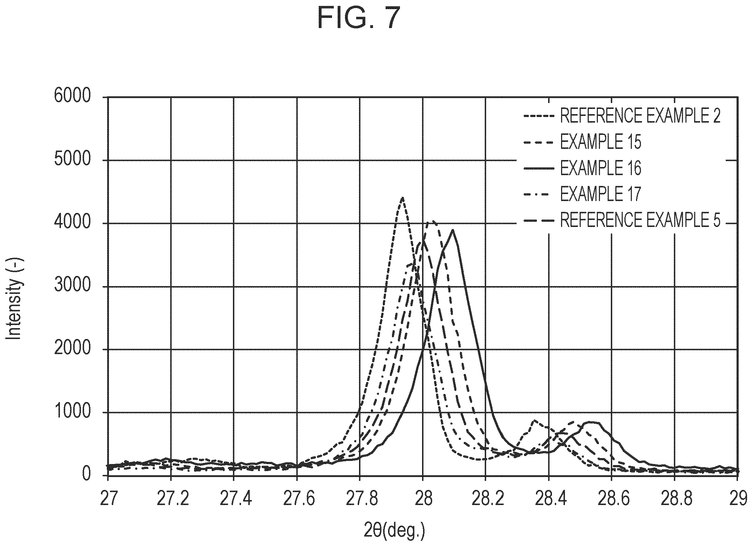

Fig. 7 illustrates X-ray diffraction curves of the solid electrolytes according to Examples 15 to 17 in the range of diffraction angle 2θ = 27° or more and 29° or less. It can be seen that the peak positions near diffraction angles of 2θ = 28.1° and 28.5° observed in the solid electrolytes according to Example 15 are shifted to higher angles than the respective peak positions of the solid electrolyte according to Reference Example 2. A comparison between the solid electrolyte according to Examples 15 and the solid electrolyte according to Reference Example 5 reveals that the peak positions near the diffraction angles 2θ = 28.1° and 28.5° are almost the same. These are considered to be a change in the X-ray diffraction profile corresponding to a change in the crystal structure caused by the substitution of at least one element selected from the group including M for at least part of Er, which is a rare-earth element.

The solid electrolytes of Examples 16 and 17 also exhibit a peak shift to higher angles, similar to Example 15. In the solid electrolytes of Examples 16 and 17, a change in the X-ray diffraction profile is considered to correspond to the change in the crystal structure caused by the substitution of at least one element selected from the group including M for at least parts of Ho and Tm, which are rare-earth elements, and the metal element A.

In the solid electrolytes according to Examples 1 to 17 in which the ionic electric conductivity σ was 5 × 10-7 S/cm or more, as presented in Table 1, the peak shift of the bimodal diffraction peaks to higher angles was observed along with the shift of the X-ray diffraction angle peaks to wider angles. That is, it can be read that in the range of 28.0° or more and 29.0° or less, the difference 2θd in diffraction angle between a higher-angle diffraction peak observed at 28.3° to 29.0° and a lower-angle diffraction peak observed at 28.0° to 28.3° is increased to 0.416° or more. In other words, the solid electrolyte according to the present embodiment contains a borate containing Li, the element R selected from the group including Yb, Er, Ho, Tm, and La, the element A selected from the group including Al, Fe, Mn, and Ga, and the element M selected from the group including Zr and Ce. Furthermore, the solid electrolyte of the present embodiment is, in other words, an electrolyte that exhibits two diffraction peaks in the diffraction angle 2θ range of 28.0° or more and 29.0° or less in XRD using the K-alpha emission line in copper, in which the difference 2θd in diffraction angle between the higher-angle diffraction peak and the lower-angle diffraction peak is 0.43° or more.

The two diffraction peaks observed in the diffraction angle 2θ range of 27.4° or more and 29.0° or less may further include multimodal peaks including trimodal or tetramodal peaks depending on the crystallinity. In the present specification, the two diffraction peaks are represented as having one peak on the lower angle side and one peak on the higher angle side, respectively, bordering a diffraction angle 2θ of 28.3°. In this way, the diffraction peaks are separated by fitting to a bimodal diffraction profile.

Such high-angle diffraction peaks are broadened and shift to higher angles more markedly than low-angle diffraction peaks as the component of the substitution element M increases or as the ionic conductivity increases. These results indicate that the solid electrolyte 44 of the present embodiment has a different crystal structure from the non-substituted comparative examples, such that multiple crystal structures having distributions in lattice spacing and crystallite size are mixed.

In each of the solid electrolytes having an ionic electric conductivity of 5E-7 (S/cm) or more according to Examples 1 to 17, the atomic concentration ratio [M]/[R] + [A] of the concentration of the substitution element M to the total concentration of the rare-earth element R and the metal element A was 0.05 or more and 0.43 or less. In each of the solid electrolytes having an ionic electric conductivity of 2E-5 (S/cm) or more according to Examples 1 to 15, the atomic concentration ratio [M]/[R] + [A] of the substitution element M to the rare-earth element R and the metal element A was 0.11 or more and 0.25 or less.

In each of the solid electrolytes having an ionic electric conductivity of 5E-7 (S/cm) or more according to Examples 1 to 17, the atomic concentration ratio [A]/[R] of the metal element A to the rare-earth element R was 0.05 or more and 1.00 or less. In each of the solid electrolytes having an ionic electric conductivity of 2E-5 (S/cm) or more according to Examples 1 to 17, the atomic concentration ratio [A]/[R] of the metal element A to the rare-earth element R was 0.11 or more and 0.25 or less.

**[Table 1]**

| | R1 | R2 | R1/ R2 | A | y | M1 | M2 | ×1 | ×2 | a | b | Sinteri ng tempe rature (°C) | Diffraction peak (°) | Difference in diffraction angle (°) | Ionic conductivi ty (S/cm) |
|---|---|---|---|---|---|---|---|---|---|---|---|---|---|---|---|
| Example 1 | Yb | | | Al | 0.05 | Zr | | 0.1 | | 0.095 | 0.005 | 670 | 28.160 | 0.432 | 1.2×10-5 |
| | | | | | | | | | | | | | 28.592 | | |
| Example 2 | Yb | | | Al | 0.1 | Zr | | 0.1 | | 0.09 | 0.01 | 670 | 28.128 | 0.464 | 3.2×10-5 |
| | | | | | | | | | | | | | 28.592 | | |
| Example 3 | Yb | | | Al | 0.2 | Zr | | 0.1 | | 0.08 | 0.02 | 670 | 28.160 | 0.448 | 2.6×10-5 |
| | | | | | | | | | | | | | 28.608 | | |
| Example 4 | Yb | | | Al | 0.3 | Zr | | 0.1 | | 0.07 | 0.03 | 670 | 28.144 | 0.464 | 1.3×10-5 |
| | | | | | | | | | | | | | 28.608 | | |
| Example 5 | Yb | | | Al | 0.4 | Zr | | 0.1 | | 0.06 | 0.04 | 670 | 28.160 | 0.448 | 1.2×10-5 |
| | | | | | | | | | | | | | 28.608 | | |
| Example 6 | Yb | | | Al | 0.5 | Zr | | 0.1 | | 0.05 | 0.05 | 670 | 28.144 | 0.448 | 4.3×10-6 |
| | | | | | | | | | | | | | 28.592 | | |
| Example 7 | Yb | | | Al | 0.1 | Zr | | 0.05 | | 0.045 | 0.005 | 670 | 28.112 | 0.432 | 4.3×10-6 |
| | | | | | | | | | | | | | 28.544 | | |
| Example 8 | Yb | | | Al | 0.1 | Zr | | 0.2 | | 0.18 | 0.2 | 670 | 28.144 | 0.432 | 3.0×10-6 |
| | | | | | | | | | | | | | 28.576 | | |
| Example 9 | Yb | | | Al | 0.1 | Zr | Ce | 0.1 | 0.025 | 0.113 | 0.013 | 670 | 28.144 | 0.448 | 4.5×10-5 |
| | | | | | | | | | | | | | 28.592 | | |
| Example 10 | Yb | | | Al | 0.15 | Zr | Ce | 0.104 | 0.019 | 0.104 | 0.018 | 670 | 28.176 | 0.432 | 5.0×10-5 |
| | | | | | | | | | | | | | 28.608 | | |
| Example 11 | Yb | La | 9 | Al | 0.1 | Zr | | 0.1 | | 0.09 | 0.01 | 670 | 28.128 | 0.432 | 2.5×10-5 |
| | | | | | | | | | | | | | 28.560 | | |
| Example 12 | Yb | | | Fe | 0.1 | Zr | | 0.1 | | 0.09 | 0.1 | 670 | 28.160 | 0.432 | 1.1×10-6 |
| | | | | | | | | | | | | | 28.592 | | |
| Example 13 | Yb | | | Mn | 0.1 | Zr | | 0.1 | | 0.09 | 0.1 | 670 | 28.144 | 0.432 | 9.4×10-7 |
| | | | | | | | | | | | | | 28.576 | | |
| Example 14 | Yb | | | Ga | 0.1 | Zr | | 0.1 | | 0.09 | 0.1 | 670 | 28.144 | 0.432 | 1.6×10-6 |
| | | | | | | | | | | | | | 28.576 | | |
| Example 15 | Er | | | Al | 0.1 | Zr | | 0.1 | | 0.09 | 0.1 | 670 | 28.032 | 0.448 | 7.5×10-7 |
| | | | | | | | | | | | | | 28.480 | | |
| Example 16 | Tm | | | Al | 0.1 | Zr | | 0.1 | | 0.09 | 0.1 | 670 | 28.096 | 0.432 | 1.2×10-5 |
| | | | | | | | | | | | | | 28.528 | | |
| Example 17 | Ho | | | Al | 0.1 | Zr | | 0.1 | | 0.09 | 0.1 | 670 | 28.016 | 0.432 | 8.8×10-7 |
| | | | | | | | | | | | | | 28.448 | | |
| Comparative Example 1 | Y | | | Al | 0.1 | Zr | | 0.1 | | 0.09 | 0.01 | 670 | 27.396 | 0.416 | 3.3×10-7 |
| | | | | | | | | | | | | | 28.352 | | |
| Comparative Example 2 | Sm | | | Al | 0.1 | Zr | | 0.1 | | 0.09 | 0.01 | 670 | 27.664 | 0.656 | 3.4×10-8 |
| | | | | | | | | | | | | | 28.320 | | |
| Reference Example 1 | Yb | | | | 0 | | | | | | | 670 | 28.065 | 0.421 | 6.3×10-8 |
| | | | | | | | | | | | | | 28.046 | | |
| Reference Example 2 | Er | | | | 0 | | | | | | | 670 | 27.935 | 0.426 | 2.2×10-8 |
| | | | | | | | | | | | | | 28.420 | | |
| Reference Example 3 | Y | | | | 0 | | | | | | | 670 | 27.904 | 0.432 | 1.6×10-8 |
| | | | | | | | | | | | | | 28.336 | | |
| Reference Example 4 | Yb | | | | 0 | Zr | | 0.1 | | 0.1 | 0 | 670 | 28.148 | 0.446 | 1.6×10-5 |
| | | | | | | | | | | | | | 28.594 | | |
| Reference Example 5 | Er | | | | 1 | Zr | | 0.1 | | 0.1 | 0 | 670 | 28.011 | 0.457 | 7.7×10-6 |
| | | | | | | | | | | | | | 28.457 | | |

The present invention is not limited to the above embodiments and various changes and modifications can be made within the spirit and scope of the present invention. Therefore, to apprise the public of the scope of the present invention, the following claims are made.

This application claims priority based on Japanese Patent Application No. 2022-104634 filed on June 29, 2022, which is hereby incorporated by reference herein in its entirety.

### Reference Signs List

44 solid field substance

## Claims

1. A solid electrolyte, comprising an oxide represented by the general formula Li6-xR1-y-aAy-bMx(BO3)3,
where in the formula, R is an element selected from Yb, Tm, Ho, Er, and La; A is an element selected from Al, Fe, Mn, and Ga; M is a tetravalent element selected from a group including Zr and Ce; a and b are real numbers satisfying 0 ≤ a, b < 1, and a + b = x; and x and y are real numbers satisfying 0 < x, y < 1.

2. The solid electrolyte according to Claim 1, wherein the solid electrolyte exhibits diffraction peaks in a range of 2θ = 28.0° or more and 29.0° or less in an X-ray diffraction analysis using a K-alpha emission line in copper, and a difference 2θd in diffraction angle between a higher-angle diffraction peak and a lower-angle diffraction peak is 0.416° or more.

3. The solid electrolyte according to Claim 1 or 2, wherein R is Yb, A contains Al, and the solid electrolyte exhibits a diffraction peak in a range of 2θ = 28.10° or more and 28.20° or less in an X-ray diffraction analysis using a K-alpha emission line in copper.

4. The solid electrolyte according to any one of Claims 1 to 3, wherein R is Yb, A contains Al, M is Zr, and x satisfies 0 < x < 1.

5. An anode according to any one of Claims 1 to 4, comprising the solid electrolyte, an anode active material configured to accept or release lithium ions to or from the electrolyte, and a surface where the solid electrolyte and the active material are arranged.

6. A secondary battery, comprising:
the anode according to Claim 5;
an electrolyte layer configured to be disposed in contact with the surface and configured to accept or release lithium ions to or from the anode; and
a cathode in contact with an opposite surface of the electrolyte layer from a side of the electrolyte layer in contact with the surface.

7. An electrolyte layer according to any one of Claims 1 to 4, comprising a surface where the solid electrolyte is arranged.

8. A secondary battery, comprising the electrolyte layer according to Claim 7, an anode configured to be disposed in contact with the surface and so as to accept or release lithium ions to or from the electrolyte layer, and a cathode in contact with an opposite surface of the electrolyte layer from the surface.

9. A solid electrolyte, comprising a borate containing Li, an element R selected from a group including Yb, Er, Ho, Tm, and La, an element A selected from a group including Al, Fe, Mn, and Ga, and an element M selected from a group including Zr, Ce, and Sn.

10. The solid electrolyte according to Claim 9, wherein an atomic concentration ratio [M]/([R] + [A]) of the element M to a total of the element R and the element A is 0.05 or more and 0.43 or less.

11. The solid electrolyte according to Claim 10, wherein the atomic concentration ratio [M]/([R] + [A]) is 0.11 or more and 0.25 or less.

12. The solid electrolyte according to any one of Claims 9 to 11, wherein an atomic concentration ratio [A]/[R] of the element A to the element R is 0.05 or more and 0.50 or less.

13. The solid electrolyte according to Claim 12, wherein the atomic concentration ratio [A]/[R] of the element A to the element R is 0.11 or more and 0.25 or less.

14. A solid electrolyte, comprising a borate containing Li, an element R selected from a group including Yb, Er, Ho, Tm, and La, an element A selected from a group including Al, Fe, Mn, and Ga, and an element M selected from a group including Zr and Ce, wherein the solid electrolyte exhibits two diffraction peaks in a diffraction angle 2θ range of 28.0° or more and 29.0° or less in an X-ray diffraction analysis using a K-alpha emission line in copper, and a difference 2θd in diffraction angle between a higher-angle diffraction peak and a lower-angle diffraction peak is 0.416° or more.

15. A solid electrolyte, comprising an oxide represented by the general formula Li6-xR1-y-aAy-bMx(BO3)3,
where in the formula, R is a rare-earth element selected from Yb, Tm, Ho, Er, and La; A is a trivalent element selected from Al, Fe, Mn, and Ga; M is a tetravalent element selected from a group including Zr and Ce; a and b are real numbers satisfying 0 ≤ a, b < 1, and a + b = x; and x and y are real numbers satisfying 0 < x, y < 1.

16. The solid electrolyte according to Claim 14, wherein the solid electrolyte exhibits two diffraction peaks in a diffraction angle 2θ range of 28.0° or more and 29.0° or less in an X-ray diffraction analysis using a K-alpha emission line in copper, and a difference 2θd in diffraction angle between a higher-angle diffraction peak and a lower-angle diffraction peak is 0.416° or more.

17. The solid electrolyte according to any one of Claims 9 to 13, wherein the element M contains Zr.

18. The solid electrolyte according to Claim 17, wherein the element M further contains Ce.

19. The solid electrolyte according to any one of Claims 9 to 13, wherein the element R contains multiple rare-earth elements.

20. The solid electrolyte according to Claim 19, wherein the multiple rare-earth elements contains at least Yb.

21. The solid electrolyte according to Claim 9 or 20, wherein the element R contains Yb, A contains Al, and the solid electrolyte exhibits a diffraction peak in a diffraction angle 2θ range of 28.0° or more and 28.20° or less in an X-ray diffraction analysis using a K-alpha emission line in copper.

22. The solid electrolyte according to Claim 15, wherein R contains Yb, A contains Al, M contains Zr, and x satisfies 0 < x < 1.

23. An anode, comprising the solid electrolyte according to any one of Claims 9 to 13 and 17 to 20, and an anode active material configured to accept or release lithium ions to or from the solid electrolyte.

24. The anode according to Claim 23, wherein the anode has a surface where the solid electrolyte and the anode active material are arranged.

25. A secondary battery, comprising:
the anode according to Claim 24;
an electrolyte layer configured to be disposed in contact with the surface and configured to accept or release lithium ions to or from the anode; and a cathode in contact with an opposite surface of the electrolyte layer from a side on which the electrolyte layer is in contact with the surface.

26. An electrolyte layer, comprising a surface where the solid electrolyte according to any one of Claims 9 to 13 and 17 to 20 is arranged.

27. A secondary battery, comprising the electrolyte layer according to Claim 26, an anode configured to be disposed in contact with the surface and so as to accept or release lithium ions to or from the electrolyte layer, and a cathode in contact with an opposite surface of the electrolyte layer from the surface.
